# EUROPÄISCHE PATENTSCHRIFT

(11) **EP 2 878 425 B1**
(45) Veröffentlichungstag und Bekanntmachung des Hinweises auf die Patenterteilung: **21.02.2018**
(21) Anmeldenummer: 14194929.7
(22) Anmeldetag: 26.11.2014
(51) Int. Cl.: B29C 49/78, B29C 49/48

(54) **Blasformmaschine mit Wechselroboter und Verfahren zu deren Betrieb**
Blow-moulding machine with changing robot and method for the operation of same
Machine de formage par soufflage équipée de robots de remplacement et son procédé de fonctionnement

(30) Priorität: 26.11.2013 DE 102013113076
(43) Veröffentlichungstag der Anmeldung: 03.06.2015
(60) Teilanmeldung: 17206667.2
(73) Patentinhaber: Krones AG, 93073 Neutraubling (DE)
(72) Erfinder: Finger, Dieter, 93073 Neutraubling (DE); Geltinger, Florian, 93073 Neutraubling (DE); Schwoed, Gerhard, 93073 Neutraubling (DE); Voth, Klaus, 93073 Neutraubling (DE)
(74) Vertreter: Bittner, Bernhard

(56) Entgegenhaltungen:
- WO-A1-2013/060549
- AT-A1- 503 196
- DE-A1-102009 040 977
- DE-A1-102011 052 574

## Beschreibung

Die vorliegende Erfindung bezieht sich auf eine Vorrichtung zum Umformen von Kunststoffvorformlingen zu Kunststoffbehältnissen. Derartige Vorrichtungen sind aus dem Stand der Technik seit langem bekannt, siehe dazu WO2013/060549, DE102011052574 und DE102009040977. Dabei werden erwärmte Kunststoffvorformlinge üblicherweise durch Beaufschlagung mit Luftdruck zu Kunststoffbehältnissen wie Kunststoffflaschen umgeformt. Zu diesem Zweck ist üblicherweise an einem drehbaren Träger eine Vielzahl von Umformungsstationen bzw. Blasstationen angeordnet. Diese Blasstationen weisen dabei jeweils Blasformen auf, die einen Hohlraum aufweisen, innerhalb dessen die Kunststoffvorformlinge zu den Kunststoffbehältnissen umgeformt werden. Diese Blasformen weisen damit ein Negativ des herzustellenden Behältnisses auf. Falls die Vorrichtung auf andere Behältnisse umgestellt werden soll, müssen die einzelnen Blasformen ausgewechselt werden. Im Stand der Technik werden diese Blasformen einzeln von den jeweiligen Umformungsstationen entnommen. Ein Bediener nimmt dabei die einzelnen Blasformeinrichtungen heraus und ersetzt sie durch neue Blasformeinrichtungen, welche die entsprechenden neuen Behältnisse formen sollen. Daher dauert der Wechselvorgang relativ lange und es ist auch ein Bediener notwendig.

Der vorliegenden Erfindung liegt daher die Aufgabe zugrunde, eine derartige Umstellung von Blasformmaschinen zu vereinfachen. Insbesondere sollen auch entsprechende Wechselvorgänge beschleunigt werden.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Transporteinrichtung auf, welche die Kunststoffvorformlinge entlang eines vorgegebenen Transportpfades transportiert. Dabei weist die Transporteinrichtung einen beweglichen und zumindest mittelbar an einem stationären Basisträger angeordneten Stationsträger auf, an dem eine Vielzahl von Umformungsstationen angeordnet ist, wobei diese Umformungsstationen jeweils Blasformeinrichtungen aufweisen, welche jeweils Hohlräume ausbilden, innerhalb derer die Kunststoffvorformlinge zu den Kunststoffbehältnissen umformbar sind. Dabei sind diese Blasformeinrichtungen jeweils an Blasformträgern angeordnet. Bevorzugt sind diese Blasformträger Bestandteil der einzelnen Umformungsstationen und sind damit bevorzugt ebenfalls mittelbar an dem Stationsträger angeordnet.

Erfindungsgemäß weist die Vorrichtung eine Wechseleinrichtung auf, welche geeignet und dazu bestimmt ist, zumindest die Blasformeinrichtungen von deren Blasformträger zu entfernen und/oder Blasformeinrichtungen an den Blasformträgern anzuordnen, wobei die Wechseleinrichtung eine erste Steuerungseinrichtung zum Steuern einer Entfernungsbewegung der Blasformeinrichtungen und/oder einer Anordnungsbewegung zum Anordnen der Blasformeinrichtung an den Blasformträgern aufweist und auch die Vorrichtung eine zweite Steuerungseinrichtung zum Steuern eines Blasformvorgangs aufweist, wobei die erste Steuerungseinrichtung und die zweite Steuerungseinrichtung bevorzugt wenigstens zeitweise zusammenwirken.

Mit anderen Worten sind bevorzugt diese beiden Steuerungseinrichtungen dazu bestimmt und geeignet, wenigstens zeitweise, insbesondere während eines Wechselmodus, innerhalb dessen die Blasformteile ausgewechselt werden können, zusammenzuwirken. Dabei kann bevorzugt auf die Steuerungseinrichtung zum Steuern des Blasformvorgangs zurückgegriffen werden, beispielsweise zu dem Zweck, dass der Träger, an dem die Umformungsstationen angeordnet sind, jeweils nach dem Einwechseln einer bestimmten Blasform weitergedreht wird, so dass auch die nachfolgende Blasform eingewechselt werden kann. Auch kann auf die Steuerung des Blasformvorgangs insoweit zurückgegriffen werden, als beispielsweise eine Öffnungsbewegung der Blasformträger auch zur Entnahme einer Blasform genutzt werden kann.

Insbesondere wirken diese beiden Steuerungseinrichtungen während eines Blasformwechselvorgangs zusammen. So können während eines Wechselvorgangs die gleichen Bewegungen, die auch im Arbeitsbetrieb nötig sind, auch für den Wechselvorgang verwendet werden, wie beispielsweise die Transportbewegung der Umformungsstationen, das Öffnen und Schließen der Blasformträger und dergleichen.

Während des Wechselvorgangs können die Blasformträger ebenfalls geöffnet werden, um die Blasformeinrichtung entnehmen zu können. So kann beispielsweise die zweite Steuerungseinrichtung eine Öffnung der Blasformträger bewirken und in Abhängigkeit hiervon kann die erste Steuerungseinrichtung ein Herausnehmen der Blasformeinrichtungen bewirken. Auch hierdurch wird ein vollautomatischer Wechsel der Blasformen möglich. Damit interagiert bevorzugt die Steuerung der Wechseleinrichtung mit der Steuerungseinrichtung der Umformungsmaschine bzw. Blasmaschine.

Weiter weist die Wechseleinrichtung wenigstens einen schwenkbaren Wechselarm auf und ist wenigstens mittelbar an dem Basisträger angeordnet. Es wird daher vorgeschlagen, eine Wechseleinrichtung, insbesondere in Form eines Wechselroboters direkt im Bereich der Vorrichtung zum Umformen anzuordnen. Vorteilhaft weist daher diese Vorrichtung einen Basisträger, wie etwa ein Maschinengestell, auf, an dem auch der Stationsträger angeordnet ist. An diesem Basisträger ist wiederum auch der Wechselroboter angeordnet, sodass er insgesamt in die Maschine integriert werden kann.

Unter einer wesentlich mittelbaren Anordnung wird dabei verstanden, dass die Wechseleinrichtung direkt an dem Basisträger angeordnet sein kann, es aber auch denkbar ist, dass die Wechseleinrichtung an einem weiteren Element angeordnet ist, etwa einem Zwischenträger, der wiederum an dem Basisträger angeordnet ist.

Es wird damit eine Integration der Wechseleinrichtung bzw. des Roboters in die Maschine vorgeschlagen. Vorteilhaft ist die Blasformeinrichtung mehrteilig ausgebildet und weist zumindest zwei Seitenteile und ein Bodenteil auf. Im Betrieb bilden diese drei Teile den besagten Hohlraum zum Expandieren der Kunststoffvorformlinge aus. Vorteilhaft sind wenigstens zwei Teile und besonders bevorzugt alle drei Teile dieser Blasformeinrichtung miteinander verriegelbar, sodass die Blasform in ihrer Gesamtheit aus der Maschine bzw. von dem Blasformträger entfernt werden kann. Der Blasformträger ist damit zur Aufnahme unterschiedlicher Blasformeinrichtungen geeignet. Dabei wäre es möglich, dass die Blasformeinrichtung selbst noch mittels Trägerschalen an dem Blasformträger angeordnet ist.

Vorteilhaft sind die Blasformträger bezüglich einander bewegbar und insbesondere schwenkbar. Dabei können in einem Arbeitsbetrieb die Blasformträger um einen vorgegebenen Schwenkwinkel auseinandergeschwenkt werden, um Kunststoffvorformlinge einzubringen und/oder um gefertigte Behältnisse zu entnehmen. Dabei sind bevorzugt für den Wechselbetrieb größere Öffnungswinkel möglich.

Bei einer weiteren vorteilhaften Ausführungsform weisen die Umformungsstationen jeweils Reckstangen auf, die im Betrieb in die Kunststoffvorformlinge einführbar sind, um diese in deren Längsrichtung zu dehnen. Vorteilhaft weisen die einzelnen Umformungseinrichtungen auch Beaufschlagungseinrichtungen auf, welche insbesondere Blasdüsen aufweisen, welche im Betrieb die Kunststoffvorformlinge mit einem fließfähigen und insbesondere einem gasförmigen Medium beaufschlagen. Es wäre dabei möglich, dass auch andere Teile der Umformungsstationen ausgewechselt werden, wie insbesondere die besagte Beaufschlagungseinrichtung bzw. Blasdüsen und/oder die Reckstangen.

Vorteilhaft handelt es sich bei dem Stationsträger um einen drehbaren Träger, wie insbesondere um ein Blasrad. Die einzelnen Umformungsstationen sind bevorzugt an einem Außenumfang dieses drehbaren Trägers angeordnet. Damit werden die Umformungsstationen im Arbeitsbetrieb entlang eines kreisförmigen Pfades bewegt.

Vorteilhaft weist die Vorrichtung eine Antriebseinrichtung zum Bewegen des Stationsträgers auf und diese Antriebseinrichtung ermöglicht dabei bevorzugt sowohl eine kontinuierliche Bewegung des Stationsträgers als auch eine getaktete Bewegung des Stationsträgers, welche damit zwischen Bewegungen jeweils Ruhephasen aufweist. Vorteilhaft ist dabei diese Bewegungsart in Abhängigkeit von einem Betriebsmodus einstellbar. In einem Arbeitsbetrieb wird der Stationsträger bevorzugt kontinuierlich bewegt und in einem Wechselbetrieb bevorzugt getaktet. Dabei kann eine Bewegung dieses Stationsträgers auch auf Bewegungen der Wechseleinrichtungen abgestimmt sein. Vorteilhaft handelt es sich beim dem Stationsträger um ein Blasrad.

Durch die erfindungsgemäße Vorgehensweise wird ein vollautomatischer Wechselvorgang, insbesondere mittels eines Industrieroboters, ermöglicht. Vorteilhaft kann dabei die Blasformeinrichtung, insbesondere in einem Wechselbetrieb, vollautomatisch verriegelt werden, bzw. die einzelnen Elemente der Blasformeinrichtungen aneinander befestigt werden. Die Wechseleinrichtung ist damit bevorzugt geeignet, die vollständige Blasformeinrichtung, das heißt deren mindestens drei Bestandteile im Verbund zu greifen bzw. zu entnehmen. Vorteilhaft kann nach dem Greifen der Blasformeinrichtung eine entsprechende Formverriegelung deaktiviert werden. In einem weiteren Schritt kann die Wechseleinrichtung den Formverbund in einer Lagervorrichtung, wie einem Magazin, absetzen. In der Folge kann die Wechseleinrichtung einen neuen Formverbund bzw. eine neue Blasformeinrichtung in einen Blasformträger einsetzen und (bevorzugt) die neue Blasformeinrichtung mit dem Blasformträger verriegeln.

Anschließend kann der Stationsträger um eine Position weitergefahren werden, um eine weitere Blasformeinrichtung auszuwechseln. Damit kann insbesondere ein vollautomatischer Vorgang durchgeführt werden, bei dem kein Benutzer notwendig ist.

Bei einer weiteren vorteilhaften Ausführungsform weist die Vorrichtung ein Gehäuse auf, welche zumindest den Stationsträger in dessen Umfangsrichtung umgibt. Dabei kann im Prinzip die vollständige Blasformeinrichtung und/oder die Wechseleinrichtung innerhalb eines Gehäuses angeordnet sein, wobei dieses Gehäuse auch eine Schutzfunktion aufweisen kann.

Die Wechseleinrichtung wird bevorzugt direkt in die Maschine integriert und kann beispielsweise an einem Grundgestell angebaut sein. Bei einer weiteren vorteilhaften Ausführungsform ist die Wechseleinrichtung in ihrer Gesamtheit in einem von dem Gehäuse umgebenden Raum verlagerbar. In diesem Falle ist es möglich, dass in einem Betriebszustand die Wechseleinrichtung vollständig in die Maschine integriert ist und so beispielsweise von außen noch nicht einmal sichtbar ist und insbesondere den Betrieb der Umformungseinrichtung nicht stört. Dabei ist es möglich, dass eine Verkleidung des Gehäuses auch als Schutzeinrichtung für die Wechseleinrichtung bzw. den Roboter dient. Im Arbeitsbetrieb ist damit bevorzugt die besagte Wechseleinrichtung innerhalb des Gehäuses angeordnet.

Bei einer weiteren bevorzugten Ausführungsform weist die Wechseleinrichtung eine erste Steuerungseinrichtung zum Steuern einer Entfernungsbewegung der Blasformeinrichtungen und/oder der Anordnungsbewegung zum Anordnen der Blasformeinrichtung an den Blasformträgern auf und die Vorrichtung weist auch eine zweite Steuerungseinrichtung zum Steuern eines Blasvorgangs auf, wobei eine Steuerungseinrichtung in die andere Steuerungseinrichtung integriert ist.

Insbesondere ist dabei die Steuerung der Wechseleinrichtung in eine Steuerung der Vorrichtung bzw. Blasmaschine integriert. So wäre es möglich, dass die Wechseleinrichtung als Modul ausgeführt ist, welches auch steuerungstechnisch, beispielsweise nach einem Zusammenstecken oder steuerungstechnischen Verbinden, in die Blasformmaschine integriert werden kann. Auch wäre es so möglich, dass eine Wechseleinrichtung an bereits bestehende Vorrichtungen nachgerüstet wird. Diese Steuerungseinrichtungen können dabei derart gestaltet sein, dass ein Schutzbereich während eines Wechselbetriebs erweitert wird. In einem Arbeitsbetrieb kann sich die Wechseleinrichtung in einer Ruheposition befinden, in der von ihr keine Gefahren ausgehen, und in der sie auch eine Bedienung der Maschine nicht verhindert.

Im Wechselbetrieb wird auch die Wechseleinrichtung aktiv, sodass diejenigen Bereiche, deren Betreten für den Benutzer unter Umständen gefährlich sein könnte, erweitert werden müssen. So ist es denkbar, dass im Rahmen des Wechselbetriebes geänderte Schutzbereiche auch für den Benutzer gesperrt oder zumindest erkennbar gemacht werden.

Dabei wäre es möglich, dass im Rahmen des Wechselbetriebes zusätzliche Schutzelemente betätigt werden, wodurch die Sicherheit des Bedieners erhöht werden kann.

Bei einer weiteren vorteilhaften Ausführungsform weist die Wechseleinrichtung wenigstens eine Greifeinrichtung zum Greifen der Blasformeinrichtungen auf. Dabei kann es sich um eine Greifeinrichtung handeln, welche die Blasformeinrichtung in ihrer Gesamtheit greift. Dabei wäre es möglich, dass an der Greifeinrichtung benötigte Medien und/oder elektrische Signale durch Bereiche der Wechseleinrichtungen, wie beispielsweise Achsen oder Schwenkarme, geführt werden. Auch wäre es möglich, dass derartige Verbindungen über Drehdurchführungen, beispielsweise an den Achsen der Wechseleinrichtungen geführt werden.

Bei einer weiteren vorteilhaften Ausführungsform weist die Wechseleinrichtung wenigstens eine Erfassungseinrichtung zum Erfassen wenigstens einer auf ein Element der Wechseleinrichtung wirkenden Kraft auf. So können insbesondere äußere Kräfte, die beispielsweise auf einen Wechselarm, der die Blasformeinrichtungen entnimmt, wirken. So kann insbesondere die oben erwähnte Steuerungseinrichtung derart ausgeführt sein, dass sie auf äußere Kräfte reagieren kann, beispielsweise während definierter Operationen wie einem Ablegen oder Aufnehmen einer Blasformeinrichtung, die Wechseleinrichtung von einer Soll-Position abweichen kann (Softfloat). Allgemein handelt es sich um eine Erfassungseinrichtung, welche auf physikalische Einwirkungen reagieren kann bzw. derartige Einwirkungen erfassen kann, wie etwa ein Drehmoment, Kräfte, Impulse oder dergleichen. Auf diese Weise ist eine schnelle Reaktion der Wechseleinrichtung möglich.

Bevorzugt bewegt sich jedoch die Wechseleinrichtung innerhalb eines begrenzten Arbeitsbereiches. Dies bedeutet, dass insbesondere auch die Entnahme- und Zuführbewegung für die Blasformeinrichtungen in einem begrenzten Arbeitsbereich stattfindet. In Reaktion auf die oben erwähnten äußeren Kräfte kann eine Position von diesem Arbeitsbereich abweichen. Ansonsten wird jedoch bevorzugt dieser definierte Arbeitsbereich eingehalten, insbesondere während eines Formenwechsels.

Dabei ist es vorteilhaft möglich, dass der Arbeitsbereich der Wechseleinrichtung sicherheitstechnisch und insbesondere mechanisch begrenzt wird. Eine derartige Begrenzung wäre durch unterschiedliche Maßnahmen möglich, etwa durch Lichtschranken, welche eine falsche bzw. zu weit gehende Bewegung der Wechseleinrichtung erfassen und in der Folge entweder eine Rückführung oder einen Notstopp der Wechseleinrichtung bewirken. Daneben wäre jedoch auch eine Begrenzung des Arbeitsbereiches durch mechanische Elemente, wie beispielsweise Anschläge, möglich.

Daneben ist es auch bevorzugt möglich, dass ein Arbeitsbereich der Wechseleinrichtung sicherheitstechnisch und elektrisch bzw. auch steuerungsseitig überprüft wird. Dabei ist es insbesondere möglich, dass dieser Arbeitsbereich abweichend von einem maximalen möglichen Arbeitsbereich (weiter) eingeschränkt wird.

Bei einer weiteren vorteilhaften Ausführungsform weist die Wechseleinrichtung eine serielle und/oder parallele Kinematik mit wenigstens drei Bewegungsachsen auf. Vorteilhaft weist die Wechseleinrichtung eine serielle und/oder parallele Kinematik mit mehr als drei Bewegungsachsen auf. Auf diese Weise wird eine sehr hohe Bewegungsfreiheit der Wechseleinrichtung bzw. eines Greifelements der Wechseleinrichtung ermöglicht. Die Blasformeinrichtungen können daher in Abhängigkeit von den tatsächlichen Gegebenheiten in unterschiedlicher Weise auch von ihren Blasformträgern entnommen bzw. diesen zugeführt werden.

Dabei ist es möglich, dass die Vorrichtung eine Bedieneinrichtung aufweist, um die Wechseleinrichtung bzw. den Greifarm zu steuern. Dabei kann es sich beispielsweise um ein Handbediengerät handeln. Es wäre jedoch auch möglich, dass eine Steuerung der Wechseleinrichtung über Geräte wie beispielsweise Smartphones steuerbar ist.

Eine Steuerung durch ein derartiges Bediengerät ist dabei insbesondere im Einrichtbetrieb, das heißt beim Zuführen von neuen Blasformeinrichtungen vorteilhaft.

Die vorliegende Erfindung ist weiterhin auf ein Verfahren zum Betreiben einer Umformungseinrichtung zum Umformen von Kunststoffvorformlingen zu Kunststoffbehältnissen gerichtet. Dabei werden in einem Arbeitsbetrieb der Vorrichtung die Kunststoffvorformlinge mittels einer Vielzahl von Umformungsstationen entlang eines vorgegebenen Transportpfades transportiert und durch Beaufschlagung mit einem fließfähigen und insbesondere gasförmigen Medium zu den Kunststoffbehältnissen expandiert. Weiterhin werden zum Expandieren der Kunststoffvorformlinge Blasformeinrichtungen verwendet, in deren Inneren die Kunststoffvorformlinge zu den Kunststoffbehältnissen expandiert werden. Dabei wird in einem Wechselbetrieb zumindest eine der Blasformeinrichtungen der Vorrichtung entnommen und/oder eine der Blasformeinrichtungen an einen Blasformträger der Vorrichtung angeordnet.

Erfindungsgemäß steuert eine erste Steuerungseinrichtung eine Entfernungsbewegung der Blasformeinrichtungen und/oder eine Anordnungsbewegung zum Anordnen der Blasformeinrichtung an den Blasformträgern und diese erste Steuerungseinrichtung wirkt vorteilhaft wenigstens zeitweise mit einer zweiten Steuerungseinrichtung zum Steuern eines Blasformvorgangs zusammen. Es wird also auch verfahrensseitig vorgeschlagen, dass der Wechselvorgang durch eine Steuerungseinrichtung gesteuert wird und diese insbesondere auch mit einer Steuerungseinrichtung, welche den Blasformvorgang bzw. einzelne Bewegungen dieses Blasformvorgangs steuert, interagiert. Dadurch können auch solche Bewegungen, welche während eines Arbeitsbetriebs bzw. eines Blasformvorgangs auftreten, für den Wechselvorgang genutzt werden.

Vorteilhaft wird zum Wechseln der Blasformeinrichtungen eine an der Vorrichtung angeordnete Wechseleinrichtung verwendet. Es wird bei dieser Ausgestaltung auch verfahrensseitig vorgeschlagen, dass derartige Blasformwechsel mittels einem an der Vorrichtung angeordneten bzw. in diese integrierten Wechselroboters durchgeführt werden.

Bei einem weiteren bevorzugten Verfahren werden die Umformungsstationen in dem Arbeitsbetrieb entlang eines umlaufenden Transportpfades transportiert und in dem Wechselbetrieb werden die Blasformeinrichtungen in einer vorgegebenen festgelegten Position der jeweiligen Umformungsstation, deren Blasformeinrichtung entnommen werden soll, bezüglich des umlaufenden Transportpfades entnommen. Es wird daher vorgeschlagen, dass im Arbeitsbetrieb die Umformungsstationen umlaufen, wie dies an sich im Stand der Technik bekannt ist. Für den einzelnen Wechselvorgang wird jedoch vorgeschlagen, dass dieser an wenigstens einer genau bestimmten Station erfolgt, die insbesondere auch in einem Wirkungsbereich der Wechseleinrichtung liegt. Mit anderen Worten ist vorteilhaft die Entnahmeposition an einem Blasrad immer identisch. Dabei ist es möglich, dass sich die Wechseleinrichtung während der Produktion oder des Arbeitsbetriebes derart ausrichtet, dass sie innerhalb eines Blasmaschinenschutzbereiches bzw. Gehäuses angeordnet werden kann.

Hinsichtlich der Steuerungseinrichtung ist es denkbar, dass diese über zwei unabhängige Koordinatensysteme den Bewegungsablauf der Wechseleinrichtung bzw. des Roboters steuert. Bevorzugt ist dabei ein Koordinatensystem an der Entnahme- bzw. Eingabeposition der Blasformeinrichtung zu der Umformungsstation bzw. den Blasformträgern platziert. Ein weiteres Koordinatensystem kann im Bereich einer Aufnahmeeinrichtung bzw. eines Magazins befindlich sein, in welchem die Blasformeinrichtungen abgelegt werden.

Es ist aber möglich, dass die Positionen der Aufnahmestellen der Blasformeinrichtungen an der Aufnahmeeinrichtung bzw. dem Magazin relativ zu dessen Koordinatensystem unabhängig von der Aufnahmeeinrichtung unverändert bleiben und/oder die Positionen der Aufnahmestellen sich in äquidistanten Abständen zu diesem Koordinatensystem befinden. Dabei ist es möglich, dass eine Anzeigeeinrichtung, wie insbesondere ein Eingabebildschirm der Wechseleinrichtung vorgesehen ist. Über diesen können bestimmte Werte der Koordinatensysteme, insbesondere die X-, Y- und Z-Werte der Koordinatensysteme verändert werden. Daneben kann bevorzugt an der Wechseleinrichtung eine weitere Eingabeeinrichtung wie ein Eingabebildschirm angeordnet sein, der bevorzugt mit einer Eingabeeinrichtung der Blasformmaschine interagiert.

Zum Entnehmen und Zuführen der Blasformeinrichtungen sind mehrere Möglichkeiten denkbar.

So wäre es denkbar, dass zunächst alle Blasformeinrichtungen aus den einzelnen Formträgern, das heißt den einzelnen Umformungsstationen entnommen werden und in ein leeres Magazin bzw. Lagersystem eingegeben werden. Anschließend wird dieses Lagersystem mit den Altformen durch ein volles Lagersystem mit neuen einzuwechselnden Blasformeinrichtungen ersetzt. Anschließend werden alle Neuformen in die Blasformträger eingegeben. Der Wechsel der Lagersysteme kann dabei beispielsweise mittels Hubwagen oder mittels Drehtischen erfolgen, etwa in der Art eines Palettenwechsels bei Werkzeugmaschinen. In diesem Falle wird der Blasformträger für einen vollständigen Wechsel vorteilhaft zwei vollständige Umdrehungen durchführen.

Bei einem weiteren möglichen Wechselvorgang enthält ein Magazin eine Leerstelle. Dabei wird zunächst eine Neuform aus einem Formplatz in diese Leerstelle gestellt. Anschließend wird eine Altform aus dem Formträger in den besagten Formplatz gestellt. In einem weiteren Schritt wird eine Neuform aus dem Magazin in den Formträger übergeben. Anschließend wird eine zweite Neuform in die Leerstelle gesetzt und so weiter, bis der gesamte Wechsel vollzogen ist. Durch das Zwischenlagern in einer Leerstelle wird gewährleistet, dass eine bestimmte Blasformeinrichtung wieder an einem bestimmten Lagerplatz bzw. einem bestimmten Blasformträger übergeben wird. Vorteilhaft befindet sich dabei die besagte Leerstelle räumlich zwischen dem Blasformträger und dem Lagersystem und bevorzugt auf bzw. in dem Lagersystem selbst.

Vorteilhaft erfolgt die Entnahme der Blasformeinrichtung und/oder die Zuführung neuer Blasformeinrichtungen in einem Taktbetrieb. Dies bedeutet, dass der einzelne Wechsel der Blasformeinrichtung erfolgt, während die Umformungsstation stillsteht. Dabei kann die Wechseleinrichtung eine bestimmte Blasformeinrichtung in einem Magazin ablegen, und währenddessen kann die Umformungseinrichtung selbst um eine Station weiter fahren, das heißt das Blasrad dreht sich um eine Position weiter. Zum Einsetzen und Entnehmen der Blasformeinrichtungen wird vorteilhaft eine relativ zu dem Transportpfad radiale Richtung verwendet. Wie oben erwähnt, ist es auch möglich, die Blasformeinrichtung in einer Zwischenstation zu parken bzw. abzustellen. Hierfür kann bevorzugt eine vertikale Bewegung verwendet werden.

Verfahrensseitig ist es möglich, dass die Greifeinrichtung der Wechseleinrichtung die Blasformeinrichtung formschlüssig greift, um diese zu transportieren bzw. aus der Vorrichtung zu entnehmen. Vorteilhaft greift die Greifeinrichtung der Wechseleinrichtung kraftschlüssig in die Blasformeinrichtung ein.

Bei einer weiteren vorteilhaften Ausführungsform erfolgt die Entnahme und/oder das Ablegen der Blasformeinrichtung weg- und/oder kraftgesteuert und bevorzugt sowohl weg- als auch kraftgesteuert.

Im Rahmen der Steuerung ist es möglich, dass die Wechseleinrichtung wenigstens einen definierten Referenzpunkt an der Umformungsstation bzw. der Aufnahme- oder den Blasformträgern anfährt und/oder bevorzugt auch wenigstens einen definierten Referenzpunkt an einem Ablageort, wie beispielsweise einem Magazin. Auf diese Weise können die besagten Punkte in die Steuerung der Wechseleinrichtung übertragen werden, wodurch die exakten Lagen der Formaufnahme bzw. des Blasformträgers und auch des Magazins bzw. der Aufbewahrungseinrichtung ermittelt werden können. Bevorzugt ist es dabei möglich, dass die besagten Referenzpunkte nach jedem Austausch einer Magazinvorrichtung angefahren werden oder auch im Falle von Störungen, wie beispielsweise Spannungsausfällen, angefahren werden, um so in die Steuerung übertragen zu werden.

Dabei ist es möglich, dass die so ermittelten Referenzpunkte abgespeichert werden und/oder mit Referenzpunkten, welche in der Steuerung bzw. einer Speicherungseinrichtung der Steuerung hinterlegt sind, abgeglichen werden. Falls zwischen dem ermittelten Referenzpunkt und dem bereits abgespeicherten Referenzpunkt eine Abweichung auftritt, die insbesondere über ein vorbestimmtes Maß hinaus geht, kann eine Fehlermeldung bzw. ein Hinweis erzeugt werden.

Bei einer weiteren vorteilhaften Ausführungsform weist die Wechseleinrichtung eine Bildaufnahmeeinrichtung, wie etwa eine Kamera oder dergleichen, auf. Mithilfe dieser Kameraeinrichtung ist es möglich, die genauen Aufnahme- bzw. Ablagepunkte für die Blasformeinrichtungen zu erfassen.

In diesem Zusammenhang ist es denkbar, dass die Blasformeinrichtungen und/oder der Blasformträger und/oder die Magazineinrichtung jeweils eine Kennzeichnung enthalten, um eine Zuordnung zwischen den Blasformeinrichtungen und der jeweiligen Blasstation zu gewährleisten. Auf diese Weise kann sichergestellt werden, dass eine bestimmte Blasformeinrichtung, die von einer bestimmten Umformungsstation entnommen wurde, bei einem weiteren Wechsel auch wieder der gleichen Umformungsstation zugeordnet wird. So wäre es möglich, dass jedem Aufnahmemagazin eine einzelne Kennung zugeordnet ist.

Diese Kennzeichnungen können dabei beispielsweise Stichcodes, QR-Codes, RFID-Tags und dergleichen sein. Vorteilhaft ist es möglich, dass diese Kennzeichnung berührungslos abgefragt wird. Vorteilhaft wird die Kennzeichnung bzw. ein für diese Kennzeichnung charakteristischer Wert in die Steuerungseinrichtung der Maschine übernommen.

Bei einem weiteren Verfahren ist es auch denkbar, dass die jeweiligen Kennzeichnungen nach jedem Wechsel der Magazineinrichtung oder auch bei Ausfällen der Maschine erneut eingelesen werden. Auf diese Weise kann eine sichere Zuordnung auch unter Ausnahmebedingungen gewährleistet werden.

Im Folgenden wird noch eine Aufnahmeeinrichtung bzw. ein Magazin für die Blasformeinrichtungen beschrieben. Diese Aufnahmeeinrichtung kann für einen Formwechsel an einer geeigneten Position angeordnet werden, etwa neben der Umformungseinrichtung. Dabei kann die Magazin- bzw. Aufnahmevorrichtung Einführbereiche aufweisen, über welche die Blasformeinrichtungen in das Magazin bzw. die Aufnahmeeinrichtungen abgelegt werden können. Diese Einführbereiche können dabei konisch ausgeführt sein, um ein sicheres Einführen der Blasformeinrichtungen zu ermöglichen. Vorteilhaft wird dabei die Blasformeinrichtung bzw. das Formenpaket im Wesentlichen vertikal in das Magazin eingeführt. Besonders bevorzugt kann die Blasformeinrichtung in zylindrischen Öffnungen des Magazins bzw. der Aufnahmeeinrichtung abgelegt werden. Das Magazin selbst kann - insbesondere formschlüssig - in dieser Aufnahmeeinrichtung angeordnet sein.

Bei einer bevorzugten Ausführungsform kann diese Magazinvorrichtung dabei elastische Elemente, insbesondere im Bereich der zylindrischen Öffnungen, zum Einführen der Blasformeinrichtungen aufweisen, um Toleranzen ausgleichen zu können.

Bei einer weiteren vorteilhaften Ausführungsform wäre es auch möglich, dass die Magazin- bzw. die Aufnahmeeinrichtung und/oder die Blasformeinrichtung in den Bereichen, in denen die Blasformeinrichtung mit den zylindrischen Öffnungen der Magazinvorrichtung in Kontakt tritt, mit Einführbereichen und insbesondere mit kegeligen Einführbereichen ausgestattet ist.

Bei einer weiteren vorteilhaften Ausführungsform weist, wie oben erwähnt, die Magazin- bzw. Aufnahmevorrichtung eine Vielzahl von Öffnungen zum Aufnehmen der einzelnen Blasformeinrichtungen auf. Dabei sind diese Öffnungen vorteilhaft zylindrisch ausgebildet. Besonders bevorzugt sind diese Öffnungen in den Magazinvorrichtungen zumindest bereichsweise aus Kunststoff ausgeführt.

Dabei ist es möglich, dass diese Öffnungen in mehreren Reihen angeordnet sind und beispielsweise zwei benachbarte Reihen gegenüber einander versetzt sind. Auf diese Weise kann die Packungsdichte der Blasformeinrichtungen erhöht werden.

Bei einer weiteren vorteilhaften Ausführungsform ist die Position der Blasformeinrichtung innerhalb der Aufnahmeeinrichtung niedriger als die Position der Blasformeinrichtung in dem Blasformträger. Auf diese Weise wird bei der Demontage der Blasformeinrichtung diese nach unten abgesenkt.

Bei einer weiteren vorteilhaften Ausführungsform weist das Magazin eine mehreckige und bevorzugt rechteckige Außenkontur auf, wobei bevorzugt die Längsseite dieser Außenkontur im Wesentlichen senkrecht zu einer gedachten radialen Verbindungslinie zwischen einem Teilkreismittelpunkt und den Blasformträgern angeordnet ist. Auf diese Weise kann die Magazineinrichtung von der Wechseleinrichtung bzw. einem Arm der Wechseleinrichtung sehr leicht erreicht werden.

Im Folgenden wird die Ausgestaltung der Blasformeinrichtung beschrieben. So ist es denkbar, dass zum Entriegeln der Blasformeinrichtungen an einem Formträger oder auch einer Formträgerschale bzw. auch beim Entriegeln eines Bodenteils der Blasformeinrichtung die Anordnung, das heißt insbesondere die Seitenteile und das Bodenteil, mechanisch miteinander verbunden werden. Es käme jedoch auch eine magnetische Verbindung in Betracht.

Vorteilhaft ist ein derartiger Fixiermechanismus, der die einzelnen Blasformteile miteinander verbindet, so ausgeführt, dass dieser nur eine Kraft in einer Zugrichtung aufweist bzw. ausführt und radial hierzu eine bestimmte Nachgiebigkeit aufweist, um Toleranzen auszugleichen. Vorteilhaft kann an den Teilen der Blasformeinrichtungen, wie etwa den Blasformhälften, ein Vorsprung, ein Nocken oder dergleichen vorgesehen sein, welcher von einem Element der Greifeinrichtung hintergriffen werden kann oder in welchen die Greifeinrichtung einfahren kann.

Bei einer weiteren vorteilhaften Ausführungsform sind die in Verbindung mit einer Greifeinrichtung stehenden Vorsprünge oder Nocken vorteilhaft radial innerhalb des durch einen Behältnismittelpunkt beschriebenen Teilkreises angeordnet. Auf diese Weise kann erreicht werden, dass diese Nocken auch im Arbeitsbetrieb nicht mit Klammern, beispielsweise eines Einlauf- und Auslaufstern in Kontakt treten können.

Bei einer weiteren vorteilhaften Ausführungsform wäre es auch möglich, dass zwischen den beiden Formschalen und einer Bodenform der Blasformeinrichtung eine formschlüssige Verbindung vorliegt, welche ein Verdrehen der Bodenform relativ zu den Seitenteilen bzw. Formschalen verhindert. Daneben wäre es auch möglich, dass die Bodenform vor dem Wechselvorgang mechanisch mit den Formhälften verbunden wird.

Zur Vereinfachung eines Belade- und Entladevorgangs wäre es möglich, dass eine Rotationsachse der Blasformeinrichtung während des Be- und Entladens (der Kunststoffbehältnisse) im Wesentlichen parallel zur Achse des Formträgers bzw. auch zu einer Drehachse des Blasrades verläuft.

In einer weiteren vorteilhaften Ausführungsform wäre es auch möglich, dass ein Schutzbereich der Blasmaschine während einer Produktion automatisch von einem Ablagebereich der Blasformen bzw. Blasformeinrichtungen getrennt wird. Eine derartige Trennung kann dabei automatisch bei einem Beginn bzw. Starten eines Formwechselvorgangs - insbesondere automatisch - durchgeführt werden.

Dabei können die Schutzbereiche so geändert werden, dass ein Maschinenbediener während der Produktion der Vorrichtung bzw. während des Arbeitsbetriebs einen Bereich der Formenablage betreten kann. So wäre es denkbar, dass beispielsweise eine elektromechanische Einheit die Position einer Umformungsstation relativ zu der Wechseleinrichtung jeweils nach der Positionierung des Blasrades bevorzugt form- und/oder kraftschlüssig sicherstellt.

Weiterhin wäre es auch denkbar, dass der Roboter die Blasformeinrichtung bzw. das Formenpaket aus einer Zwischenposition in das Magazin ablegt, während das Blasrad einen Takt weiter fährt bzw. eine nachfolgende Umformungsstation in eine Wechselposition bringt. Daneben könnte allgemein der Ablauf eines Blasformeinrichtungswechsels das Anfahren einer Zwischenstation beinhalten, an der die Blasformeinrichtung temporär geparkt bzw. abgelegt wird. In diesem Falle braucht die Halteeinrichtung nicht als Doppelgreifer ausgeführt sein und es ist dennoch eine stationsgerechte Zuordnung der Formen in einer Aufbewahrungseinrichtung wie einem Magazin möglich.

Wie oben bereits erwähnt, kann es vorteilhaft sein, wenn die Öffnungsbewegungen des Blasformträgers und des Bodens in einer Wechselposition für die Blasformeinrichtung von der im Betrieb abweicht. Dies kann beispielsweise bei einer nicht gekoppelten Formträgeransteuerung vorteilhaft sein. Auch wäre es möglich, dass ein relativ zu der in der Blasformeinrichtungswechselposition jeweils vor- bzw. nacheilenden Blasformträger der Nachbarstation ebenfalls bereichsweise weggeschwenkt wird, um für die in der Wechselposition befindliche Umformungsstation einen größeren Öffnungswinkel zu ermöglichen.

Weiterhin wäre es möglich, dass ein Fixiermechanismus für die Formschalen und die Bodenformen während eines Spannablaufs eine progressive Kennlinie aufweist. Zu Beginn eines derartigen Spannablaufs kann ein großer Hub mit einer geringen Kraft erfolgen, um möglichst große Abstände beim Einziehen überbrücken zu können. Gegen Ende des Spannablaufs wird bevorzugt eine große Kraft bei nur geringem Hub durchgeführt.

Bei einem weiteren vorteilhaften Verfahren befindet sich die Wechselposition der Blasstation und/oder das Magazin und/oder eine etwaige Zwischenposition in der die Blasformeinrichtungen zwischenzeitlich positioniert werde, in einem vorgegebenen Umfangsbereich eines Wirkkreises der Wechseleinrichtung, vorzugsweise in einem Bereich von 270° des Wirkkreises, bevorzugt in einem Bereich von 220° des Wirkkreises und besonders bevorzugt in einem Bereich von 180° des Wirkkreises.

Bei einem weiteren vorteilhaften Verfahren führt die Wechseleinrichtung bzw. der Wechselroboter beim Entnehmen und/oder Anordnen der Blasformeinrichtung von den Stationen bzw. an den Blasformträgern eine relativ zu dem Teilkreis der Vorrichtung radiale Bewegung auf. Dabei kann es sich um eine rein radiale Bewegung handeln, es wäre jedoch auch denkbar, dass es sich um eine Bewegung mit einer radialen Komponente handelt.

Bei einem weiteren vorteilhaften Verfahren führt die Wechseleinrichtung bzw. der Wechselroboter beim Entnehmen und/oder Anordnen der Blasformeinrichtung von den Stationen bzw. an den Blasformträgern eine im Wesentlichen vertikale Bewegung aus. Unter im Wesentlichen wird dabei verstanden, dass die Bewegungsrichtung von der exakt vertikalen Richtung um nicht mehr als 20° bevorzugt um nicht mehr als 10° und besonders bevorzugt um nicht mehr als 5° abweicht.

Weitere Vorteile und Ausführungsformen ergeben sich aus den beigefügten Zeichnungen. Darin zeigen:
- Fig. 1: Eine schematische Darstellung einer erfindungsgemäßen Vorrichtung;
- Fig. 2: eine Darstellung der Vorrichtung mit dargestellter Wechseleinrichtung;
- Fig. 3: eine Draufsicht auf die in Fig. 2 gezeigte Vorrichtung;
- Fig. 4: eine weitere Darstellung der in Fig. 2 gezeigten Vorrichtung;
- Fig. 5: eine weitere Darstellung der in Fig. 2 gezeigten Vorrichtung in einer weiteren Betriebsposition;
- Fig. 6: eine Darstellung einer Umformungsstation;
- Fig. 7: eine Darstellung einer Formschale für eine Blasformeinrichtung;
- Fig. 8: eine Darstellung einer Wechseleinrichtung;
- Fig. 9: eine Darstellung einer Greifeinrichtung zum Greifen einer Blasformeinrichtung;
- Fig. 10: eine Darstellung einer Wechseleinrichtung mit einer Blasformeinrichtung;
- Fig. 11: eine Darstellung zur Veranschaulichung möglicher Positionen der Wechseleinrichtung; und
- Fig. 12: eine Darstellung eines Magazins mit einer Blasformeinrichtung.

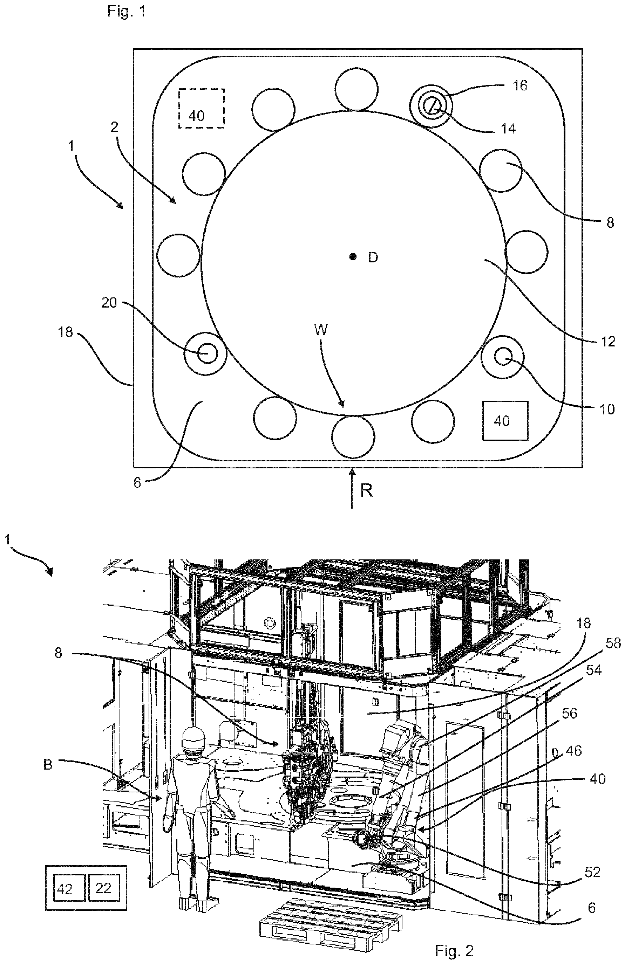

Fig. 1 zeigt eine schematische Darstellung einer Vorrichtung 1 zum Umformen von Kunststoffvorformlingen zu Kunststoffbehältnissen. Dabei werden die Kunststoffvorformlinge 10 den einzelnen Umformungsstationen 8 zugeführt und zu Kunststoffbehältnissen 20 expandiert. Nach dieser Expansion werden die Kunststoffbehältnisse wieder von der Vorrichtung entnommen. Zu diesem Zwecke kann ein Zuführstern vorgesehen sein, der die Kunststoffvorformlinge der Vorrichtung 1 zuführt sowie auf eine Abführeinrichtung, insbesondere ebenfalls ein Transportstern, der die fertiggestellten Behältnisse von der Vorrichtung abführt. Die Vorrichtung 1 weist einen Stationsträger 12 auf, an dem eine Vielzahl von Umformungsstationen 8 angeordnet ist. Dieser Stationsträger kann dabei beispielsweise, wie in Fig. 1 gezeigt, ein Blasrad sein, welches bezüglich einer Drehachse D (welche hier senkrecht zu der Figurenebene und damit vertikal verläuft) drehbar ist. Jede einzelne Umformungsstation weist dabei jeweils eine Blasformeinrichtung 14 auf. Diese Blasformeinrichtung 14 setzt sich aus zwei Seitenteilen und einem Bodenteil zusammen. Diese Blasformeinrichtungen können gemäß der Erfindung ausgewechselt werden. Die Blasformeinrichtungen 14 sind dabei an Blasformträgern 16 angeordnet und können von diesen entnommen bzw. an diesen angeordnet werden.

Das Bezugszeichen 40 kennzeichnet eine Wechseleinrichtung, welche dazu dient, die Blasformeinrichtungen von deren Blasformträgern zu entfernen oder die Blasformeinrichtungen an den Blasformträgern anzuordnen. Das Bezugszeichen 6 kennzeichnet einen Basisträger, an dem der Stationsträger 12 drehbar gelagert ist. An bzw. neben dem Basisträger 6 ist auch die Wechseleinrichtung 40 angeordnet. Damit kann die Wechseleinrichtung 40 in die Vorrichtung integriert werden. Das Bezugszeichen 18 kennzeichnet ein Gehäuse, welches zumindest teilweise den Stationsträger 12 umgibt, welches jedoch bevorzugt, wie unten gezeigt wird, auch die Wechseleinrichtung 40 einschließen bzw. einhausen kann.

Das Bezugszeichen W kennzeichnet eine Wechselposition. Wie oben erwähnt, werden die Blasformeinrichtungen bevorzugt an einer bestimmten Wechselposition eingewechselt. Dies bedeutet, dass die Umformungsstationen durch eine Drehung des Trägers 12 sukzessive in diese Wechselposition W gefahren werden können und dieser Wechselposition dann die alten Blasformeinrichtungen entnommen und bevorzugt auch neue Blasformeinrichtungen zugeführt werden können. Das Bezugszeichen R kennzeichnet eine radiale Richtung. In dieser radialen Richtung wird die Wechseleinrichtung bzw. eine Greifeinrichtung der Wechseleinrichtung bevorzugt auf die Umformungsstationen bzw. die Blasformeinrichtungen zugestellt, um diese zu wechseln.

Fig. 2 zeigt eine perspektivische Darstellung einer Vorrichtung 1, wobei hier lediglich eine Umformungseinrichtung bzw. Umformungsstation 8 dargestellt ist. Der Stationsträger an dem diese angeordnet ist, ist hier ebenfalls nicht dargestellt. Weiterhin erkennt man jedoch wieder den Basisträger 6, an den die Wechseleinrichtung 40 angeordnet ist. Diese Wechseleinrichtung 40 weist hier einen ersten schwenkbaren Arm 56 sowie einen zweiten schwenkbaren Arm 54 auf. Über eine Gelenk- und Antriebsverbindung sind diese beiden Arme schwenkbar miteinander verbunden.

Das Bezugszeichen 52 kennzeichnet eine Greifeinrichtung, welche dazu dient, um die Blasformeinrichtungen zu greifen und zu transportieren. Diese Greifeinrichtung ist dabei wiederum schwenkbar an dem zweiten Arm 54 angeordnet und bevorzugt auch drehbar. Damit ist insgesamt die Greifeinrichtung um wenigstens drei, bevorzugt um wenigstens vier Achsen im Raum schwenkbar. Daneben wäre es auch möglich, wie durch das gestrichelte Rechteck dargestellt ist, dass mehrere Wechseleinrichtungen vorgesehen sind, wobei diese insbesondere jeweils wenigstens mittelbar an dem Basisträger 6 angeordnet sind. Auf diese Weise könnten in einem Wechselbetrieb schneller die einzelnen Blasformeinrichtungen ausgewechselt werden.

Das Bezugszeichen 46 kennzeichnet schematisch eine Erfassungseinrichtung, welche auf die Wechseleinrichtung 40 bzw. die Greifeinrichtung 52 wirkende Kräfte erfasst, um so im Notfall abschalten zu können. Vorteilhaft weist die Vorrichtung mehrere derartiger Erfassungseinrichtungen auf, wobei bevorzugt jeder einzelnen Antriebseinrichtung, welche ein Bewegen der Wechseleinrichtung 40 bzw. der Greifeinrichtung 52 bewirkt, zugeordnet ist. Bei diesen Erfassungseinrichtungen kann es sich beispielsweise um Kraftmesseinrichtungen handeln, welche tatsächliche Kräfte, Drehmomente und dergleichen bestimmen. Es wäre jedoch auch möglich, dass die Kräfte aus Parametern des jeweiligen Antriebs bestimmt werden, etwa aus Strömen oder dergleichen.

Das Bezugszeichen B kennzeichnet einen Benutzer, der die Anlage bedient. Dieser kann sich vorteilhaft während eines Betriebs der Wechseleinrichtung nicht in Bereichen bewegen, welche um gekehrt von der Wechseleinrichtung 40 erreicht werden können.

Das Bezugszeichen 22 kennzeichnet eine Steuerungseinrichtung zum Steuern der Wechseleinrichtung. Das Bezugszeichen 42 kennzeichnet eine Steuerungseinrichtung zum Steuern der Umformungseinrichtung selbst. Dabei können diese beiden Steuerungseinrichtungen miteinander interagieren, insbesondere für einen Wechselbetrieb zum Auswechseln der Blasformeinrichtungen. Es ist dabei möglich, dass die Wechseleinrichtung 40 in einem normalen Arbeitsbetrieb der Vorrichtung in eine Ruhestellung verfährt, in der die Wechseleinrichtung einen möglichst geringen Platz einnimmt.

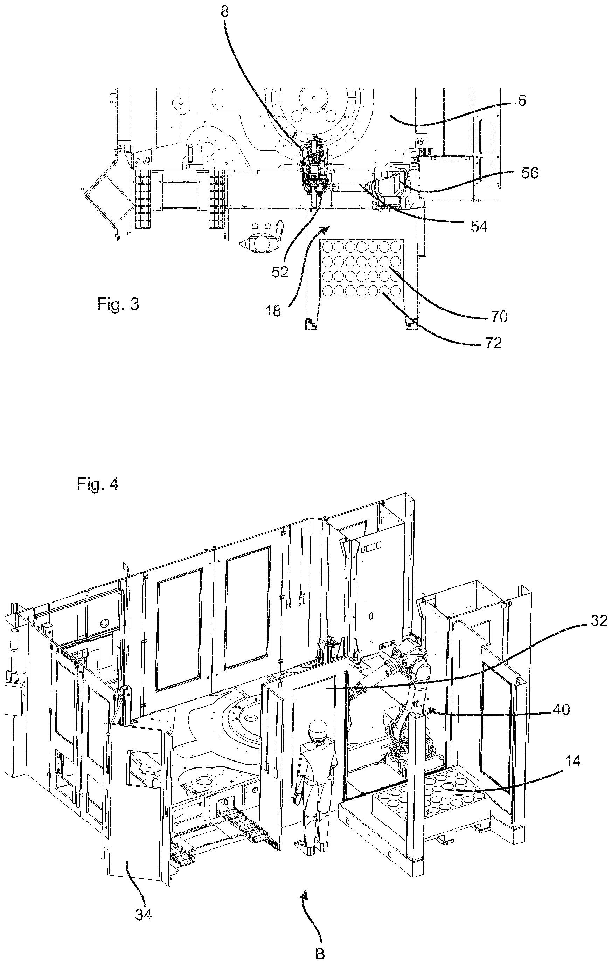

Fig. 3 zeigt eine Draufsicht auf die in Fig. 2 gezeigte Vorrichtung. Man erkennt hier, dass die Wechseleinrichtung 40 ebenfalls in das Gehäuse 18 integriert ist. Bei dem in Fig. 3 gezeigten Zustand ist der Arm 56 gerade ausgeschwenkt, sodass die Greifeinrichtung 52 gerade eine Blasformeinrichtung greifen kann.

Daneben ist auch eine Magazineinrichtung 70 dargestellt, welche eine Vielzahl von Aufnahmestellen 72 zum Aufnehmen der Blasformeinrichtungen aufweist. Diese Blasformeinrichtungen können dabei jeweils in die Aufnahmestellen bzw. Löcher 72 eingefahren werden.

Fig. 4 zeigt eine weitere Darstellung der erfindungsgemäßen Vorrichtung. Man erkennt, dass hier eine Wandung 32 vorgesehen ist, welche den Benutzer B von der Wechseleinrichtung 40 abtrennt, sodass dieser nicht verletzt werden kann. Daneben können auch weitere bewegbare Wandungsteile 34 vorgesehen sein, damit einerseits die Maschine leichter für Wartungszwecke zugänglich ist, oder andererseits auch weitere Wechseleinrichtungen vorgesehen sein können, wie auch in Fig. 1 dargestellt.

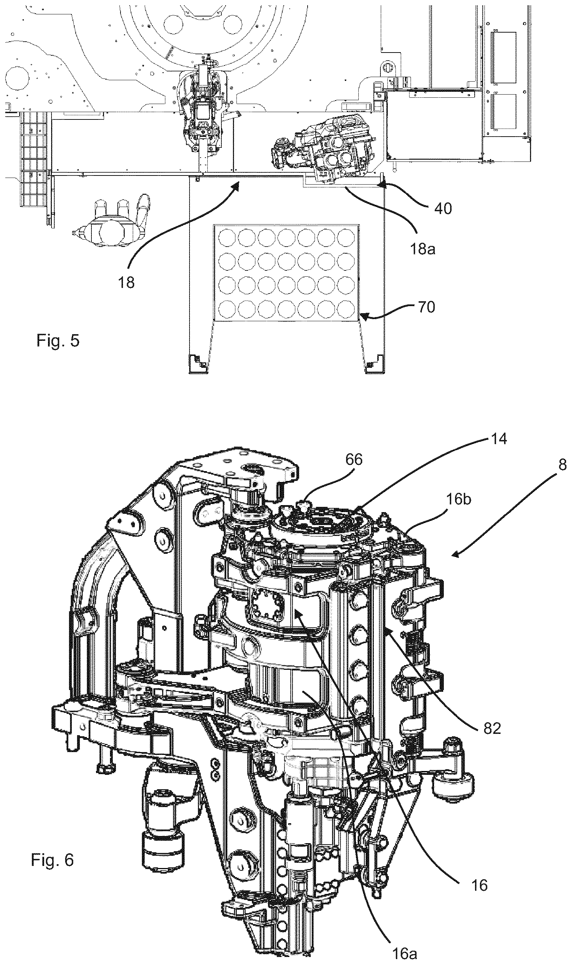

Die in Fig. 5 gezeigte Darstellung ähnelt der in Fig. 3 gezeigten Darstellung, wobei jedoch hier die Wechseleinrichtung 40 in einer anderen Betriebsposition ist. Hier kann es sich beispielweise um einen Arbeitsbetrieb handeln, bei dem die Vorrichtung Kunststoffvorformlinge zu Kunststoffbehältnissen umformt. Man erkennt, dass in dem Gehäuse 18 eine Ausnehmung 18a angeordnet sein kann, welche auch zum vollständigen Aufnehmen der Wechseleinrichtung 40 dient. Bei dem in Fig. 5 gezeigten Zustand können die einzelnen Arme der Wechseleinrichtung 40 so eingeklappt sein, dass die Wechseleinrichtung 40 einen nur geringen Platz einnimmt.

Fig. 6 zeigt eine Darstellung einer Umformungsstation 8. Man erkennt hier den Blasformträger 16, der zwei Blasformträgerteile 16a, 16b aufweisen kann, die auseinandergeschwenkt werden können, um die Blasformeinrichtung 14 zu öffnen und zu schließen. Auch für den Wechselbetrieb können die beiden Blasformträgerteile 16a, 16b auseinandergeschwenkt werden, um die Blasformeinrichtung 14 entnehmen zu können.

Das Bezugszeichen 82 kennzeichnet in seiner Gesamtheit eine Verriegelungseinrichtung, welche im Arbeitsbetrieb die beiden Blasformträgerteile 16a und 16b miteinander verriegelt, sodass auch bei größeren Drücken diese nicht auseinanderschwenken. Das Bezugszeichen 66 bezieht sich auf einen Vorsprung, der jeweils an den beiden Seitenteilen der Blasformeinrichtung 14 angeordnet ist. Dieser Vorsprung ist dabei so stabil ausgeführt, dass die gesamte Blasformeinrichtung 14 an diesem Vorsprung getragen werden kann. Dieser Vorsprung 66 kann dabei von der Greifeinrichtung bzw. einem Bestandteil der Greifeinrichtung hintergriffen werden, sodass die Greifeinrichtung 52 die Blasformeinrichtung über diesen Vorsprung tragen kann. Über ein Halten der jeweiligen Seitenteile der Blasformeinrichtung an den Vorsprüngen 66 kann auch die Blasformeinrichtung in ihrer Gesamtheit zusammengehalten werden.

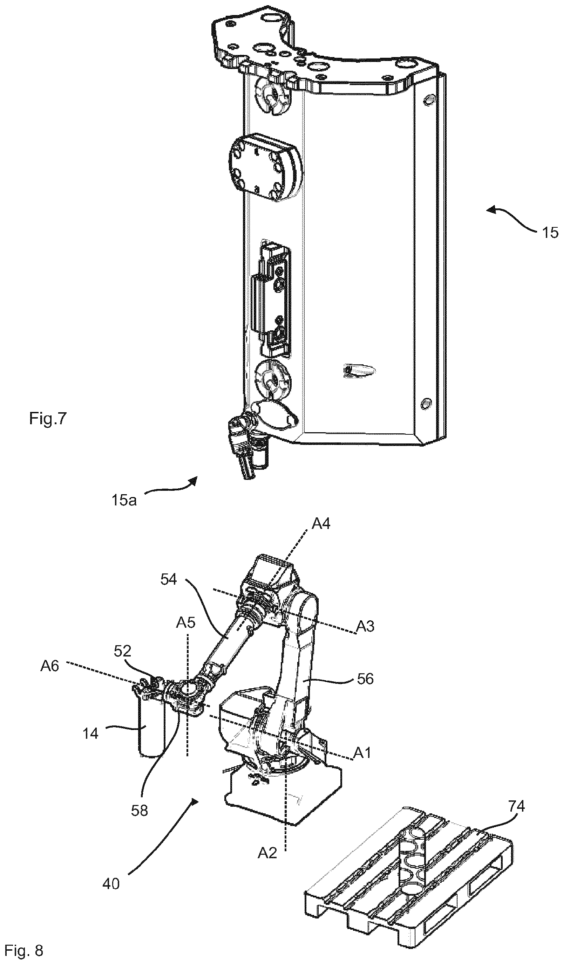

Fig. 7 kennzeichnet eine Blasformträgerschale. Diese Blasformträgerschale 15 kann an den Blasformträger 16 angeordnet sein und wiederum selbst die Blasformeinrichtung bzw. Teile der Blasformeinrichtung aufnehmen. Dabei können Zuführ- und Abführelemente 15a vorgesehen sein, um der Blasformschale 15 Medien, wie beispielsweise Temperiermedien zuzuführen.

Fig. 8 zeigt eine weitere Darstellung der Wechseleinrichtung 40. Dabei ist wiederum der erste Arm 56 dargestellt, der bezüglich einer ersten Achse A1 schwenkbar ist. Daneben ist jedoch dieser Arm 56 auch bezüglich einer zweiten Achse A2 drehbar. An diesen ersten Arm 56 ist ein zweiter Arm 54 angeordnet und dabei ist der Arm 54 bezüglich einer Achse A3 gegenüber dem ersten Arm 56 schwenkbar. Hier sind die beiden Achsen A1 und A3 parallel zueinander. Diese Achsen können jedoch auch schräg bzw. windschief zueinander angeordnet sein. Daneben ist der zweite Arm 54 auch bezüglich einer vierten Achse A4 drehbar.

Zur Erreichung dieser jeweiligen Schwenk- und Drehbewegung bezüglich der einzelnen Achsen und auch bezüglich der weiteren noch zu beschreibenden Achsen sind jeweils Antriebseinrichtungen, wie insbesondere, aber nicht ausschließlich, elektromotorische Antriebe, vorgesehen. Daneben wäre jedoch auch die Verwendung von pneumatischen und/oder hydraulischen Antrieben denkbar. An dem zweiten Arm 54 ist eine Greifeinrichtung 52 vorgesehen, welche zum Greifen der Blasformeinrichtung dient. Dieses Greifelement ist dabei bezüglich einer Achse A5 gegenüber dem Arm 54 schwenkbar. Diese Achse A5 kann hier senkrecht zu der Achse A3 und/oder auch senkrecht zu der Achse A4 stehen. Daneben ist die Greifeinrichtung über einen Träger 58 an den Arm 54 angeordnet. Die Greifeinrichtung selbst kann wiederum gegenüber diesem Träger 58 bezüglich einer Achse A6 drehbar sein.

Mittels dieser Vielzahl von Bewegungen können die Blasformeinrichtungen 14 von der einzelnen Umformungsstation abgenommen und auf einen Träger 74, der hier als Europalette dargestellt ist, gestellt werden. Es wäre jedoch auch möglich, die Blasformeinrichtungen 14 direkt in vorgesehene Öffnungen eines Magazins einzubringen.

Ein Abstand zwischen der Magazineinrichtung oder der Palette 74 und der Wechseleinrichtung 40 kann dabei zwischen 1 Meter und 2 Metern liegen. Auch ein entsprechender Aktionsradius der Wechseleinrichtung kann in einem Bereich von 1,5 Metern liegen.

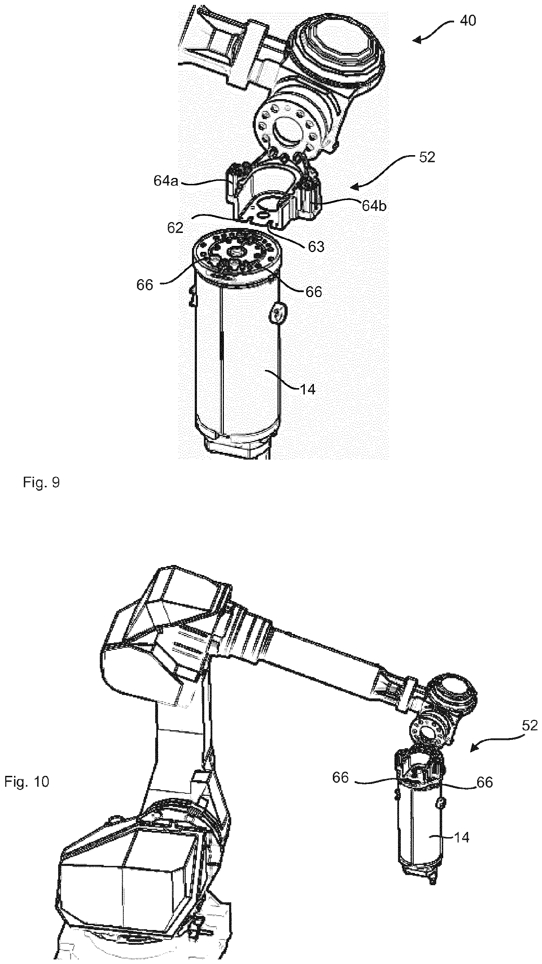

Fig. 9 zeigt eine Detaildarstellung der Wechseleinrichtung 40 bzw. deren Greifeinrichtung 52. Diese Greifeinrichtung kann dabei ein Führungselement 62 aufweisen, welches über eine entsprechende Oberfläche der Blasformeinrichtung geführt werden kann. Daneben können auch Vorsprünge 64a, 64b vorgesehen sein, welche zum Zentrieren der Wechseleinrichtung 40 bzw. genauer der Greifeinrichtung gegenüber der Umformungsstation dienen. Das Bezugszeichen 63 bezieht sich auf eine in dem Führungselement 62 angeordnete Ausnehmung, welche zum Wechseln der Blasformeinrichtung die Vorsprünge hintergreifen kann. Damit dient das Führungselement 62 auch zum Tragen der Blasformeinrichtung 14.

Fig. 10 zeigt eine Darstellung der Wechseleinrichtung mit einer daran angeordneten Blasformeinrichtung 14. Man erkennt, dass der Greifarm 52 hier in zwei Vorsprünge 66, die an der Blasformeinrichtung 14 angeordnet sind, eingreift und diese zusammendrückt, sodass auf diese Weise die Blasformeinrichtung zusammengehalten wird. Damit dienen die auch in Fig. 9 und Fig. 6 gezeigten Vorsprünge 66, die an der Blasformeinrichtung 14 angeordnet sind, zum Zusammenhalten derselben während deren Transports. Damit greift vorteilhaft die Greifeinrichtung 52 oberhalb der Blasformeinrichtung 14 in Elemente derselben ein, um diese zu halten. Diese Art des Eingreifens in die Blasformeinrichtung eignet sich in besonderer Weise, da die Blasformeinrichtung, wie auch in Fig. 6 gezeigt, über ihren Träger hinaussteht und auf diese Weise auch in einem geschlossenen Zustand des Blasformträgers 16 gegriffen werden kann. So ist es möglich, dass die Wechseleinrichtung bzw. der Roboter zunächst die Blasformeinrichtung 14 über deren Vorsprünge 66 greift und erst anschließend der Blasformträger geöffnet. Auf diese Weise kann sichergestellt werden, dass die Blasformeinrichtung zu jedem Zeitpunkt sicher gehalten wird.

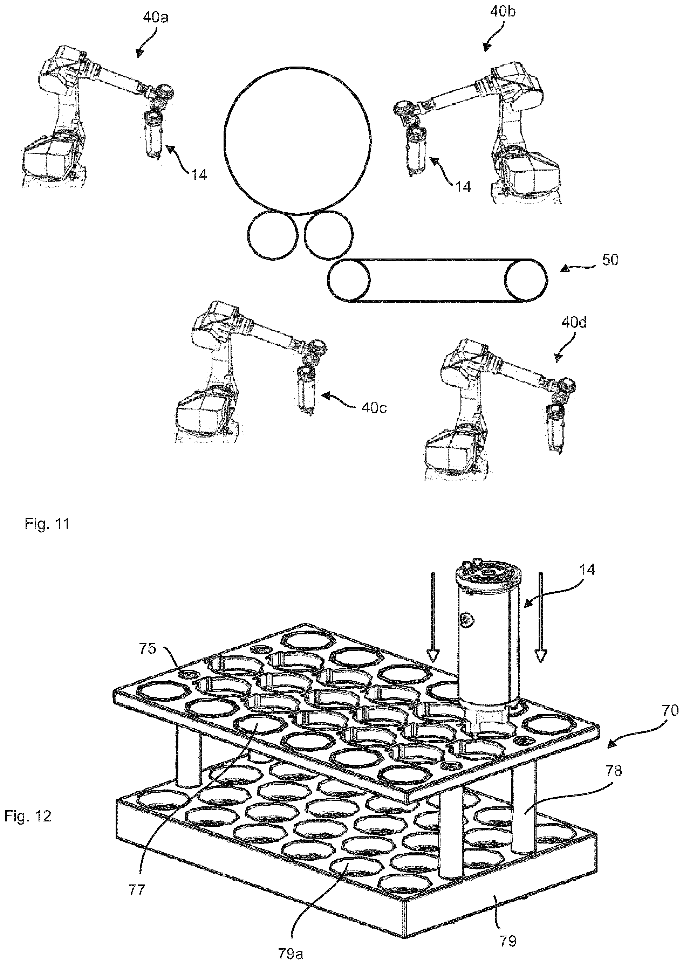

Fig. 11 zeigt eine weitere Darstellung der vorliegenden Erfindung. Hier sind mehrere Wechseleinrichtungen 40a - 40d vorgesehen, mit denen jeweils Elemente der Vorrichtung gewechselt werden können. Dabei wäre es beispielsweise möglich, dass zwei der Wechseleinrichtungen (40a, 40b) vorgesehen sind, um Blasformeinrichtungen 14 zu wechseln, dass aber auch weitere Wechseleinrichtungen vorgesehen sind, die andere Elemente auswechseln, wie beispielsweise Heizdorne, die sich in einem Ofen 50 zum Erwärmen der Kunststoffvorformlinge befinden (die Wechseleinrichtung 40d). Daneben können mit der gezeigten Wechseleinrichtung 40c beispielsweise auch Halteelemente, wie Transferzangen, gewechselt werden, welche die Kunststoffvorformlinge nach ihrer Erwärmung zu der Umformungseinrichtung 1 transportieren.

Fig. 12 zeigt eine Aufnahmeeinrichtung wie ein Magazin zum Aufnehmen der Blasformeinrichtungen 14. Dieses kann dabei eine Trägerplatte 75 enthalten, welche eine Vielzahl von Öffnungen 77 aufweist. Mittels Trägern 78 kann diese Platte 75 an einen Bodenträger 79 angeordnet sein, wobei dieser Bodenträger 79 wiederum Öffnungen 79a bzw. Löcher zum Aufnehmen der Blasformeinrichtungen aufweist. Vorteilhaft weist dieses Magazin die gleichen Abmessungen auf, wie eine sogenannte Europalette und damit vorzugsweise Abmessungen in einem Bereich von 1200 x 800 mm. Die einzelnen Öffnungen 79a sind dabei, wie in Fig. 12 gezeigt, in Reihen angeordnet und gegeneinander versetzt, sodass eine möglichst große Anzahl an Blasformeinrichtungen in die Palette eingebracht werden kann.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung / Umformungseinrichtung
- 6: Basisträger
- 8: Umformungsstationen
- 10: Kunststoffvorformlinge
- 12: Stationsträger
- 14: Blasformeinrichtung
- 15: Blasformschale
- 15a: Zu- und Abführelement für Temperiermedium
- 16: Blasformträger
- 16a 16b: Blasformträgerteile
- 18: Gehäuse

- 18a: Ausnehmung
- 20: Kunststoffbehältnisse
- 22: Steuerungseinrichtung zum Steuern der Wechseleinrichtung
- 32: Wandung
- 34: Wandungsteile
- 40: Wechseleinrichtung
- 40a-40d: Wechseleinrichtung
- 42: Steuerungseinrichtung zum Steuern der Umformungseinrichtung
- 46: Erfassungseinrichtung
- 50: Ofen
- 52: Greifeinrichtung
- 54: zweiter schwenkbarer Arm
- 56: erster schwenkbarer Arm
- 58: Träger
- 62: Führungselement
- 63: Ausnehmung
- 64a, 64b: Vorsprünge
- 66: Vorsprünge
- 70: Magazineinrichtung
- 72: Löcher
- 74: Träger / Palette
- 75: Trägerplatte
- 77: Öffnungen
- 78: Träger
- 79: Bodenträger
- 79a: Öffnungen / Löcher
- 82: Verriegelungseinrichtung
- D: Drehachse
- B: Benutzer
- A1 - A6: Achsen
- W: Wechselposition
- R: radiale Richtung

## Patentansprüche

1. Vorrichtung zum Umformen von Kunststoffvorformlingen (10) zu Kunststoffbehältnissen (20) mit einer Transporteinrichtung (2), welche die Kunststoffvorformlinge (10) entlang eines vorgegebenen Transportpfads transportiert, wobei die Transporteinrichtung (2) einen beweglichen und zumindest mittelbar an einem stationären Basisträger (6) angeordneten Stationsträger (12) aufweist, an dem eine Vielzahl von Umformungsstationen (8) angeordnet ist, wobei diese Umformungsstationen (8) jeweils Blasformeinrichtungen (14) aufweisen, welche jeweils Hohlräume ausbilden, innerhalb derer die Kunststoffvorformlinge (10) zu den Kunststoffbehältnissen umformbar sind und diese Blasformeinrichtungen jeweils an Blasformträgern (16) angeordnet sind,
wobei
die Vorrichtung (1) eine Wechseleinrichtung (40) aufweist, welche geeignet und dazu bestimmt ist, zumindest die Blasformeinrichtungen von deren Blasformträgern (16) zu entfernen und/oder Blasformeinrichtungen an den Blasformträgern (16) anzuordnen, wobei die Wechseleinrichtung (40) eine erste Steuerungseinrichtung (22) zum Steuern einer Entfernungsbewegung der Blasformeinrichtungen und/oder einer Anordnungsbewegung zum Anordnen der Blasformeinrichtungen an den Blasformträgern (16) aufweist und die Vorrichtung eine zweite Steuerungseinrichtung (42) zum Steuern eines Blasformvorgangs aufweist, wobei die erste Steuerungseinrichtung (22) und die zweite Steuerungseinrichtung (42) wenigstens zeitweise zusammenwirken, **dadurch gekennzeichnet, dass**
die Wechseleinrichtung (40) wenigstens einen schwenkbaren Wechselarm (54, 56) aufweist und die Wechseleinrichtung (40) wenigstens mittelbar an einem Basisträger (6) angeordnet ist, sodass die Wechseleinrichtung (40) direkt im Bereich der Vorrichtung zum Umformen angeordnet ist.

2. Vorrichtung (1) nach Anspruch 1,
**dadurch gekennzeichnet, dass**
die Vorrichtung (1) ein Gehäuse (18) aufweist, welches zumindest den Stationsträger (12) in dessen Umfangsrichtung umgibt.

3. Vorrichtung (1) nach Anspruch 2,
**dadurch gekennzeichnet, dass**
die Wechseleinrichtung (40) in ihrer Gesamtheit in einen von dem Gehäuse (18) umgebenen Raum verlagerbar ist.

4. Vorrichtung (1) nach wenigstens einem der vorangegangenen Ansprüche,
**dadurch gekennzeichnet, dass**
die Wechseleinrichtung (40) eine erste Steuerungseinrichtung (22) zum Steuern einer Entfernungsbewegung der Blasformeinrichtungen und/oder einer Anordnungsbewegung zum Anordnen der Blasformeinrichtungen an den Blasformträgern (16) aufweist und auch die Vorrichtung eine zweite Steuerungseinrichtung (42) zum Steuern eines Blasformvorgangs aufweist, wobei eine Steuerungseinrichtung (22) in die andere Steuerungseinrichtung (42) integriert ist.

5. Vorrichtung (1) nach wenigstens einem der vorangegangenen Ansprüche,
**dadurch gekennzeichnet, dass**
die Wechseleinrichtung (40) wenigstens eine Greifeinrichtung (52) zum Greifen der Blasformeinrichtungen (14) aufweist.

6. Vorrichtung (1) nach wenigstens einem der vorangegangenen Ansprüche,
**dadurch gekennzeichnet, dass**
die Wechseleinrichtung (40) wenigstens eine Erfassungseinrichtung (46) zum Erfassen wenigstens einer auf wenigstens ein Element der Wechseleinrichtung (40) wirkenden Kraft aufweist.

7. Vorrichtung (1) nach wenigstens einem der vorangegangenen Ansprüche,
**dadurch gekennzeichnet, dass**
die Wechseleinrichtung (40) eine serielle oder parallele Kinematik mit wenigstens drei Bewegungsachsen (A1 ... A6) aufweist.

8. Verfahren zum Betreiben einer Umformungseinrichtung zum Umformen von Kunststoffvorformlingen zu Kunststoffbehältnissen, wobei in einem Arbeitsbetrieb der Vorrichtung die Kunststoffvorformlinge mittels einer Vielzahl von Umformungsstationen (8) entlang eines vorgegebenen Transportpfads transportiert werden und durch Beaufschlagung mit einem fließfähigen Medium zu den Kunststoffbehältnissen expandiert werden, wobei zum Expandieren der Kunststoffvorformlinge Blasformeinrichtungen (14) verwendet werden, in deren Inneren die Kunststoffvorformlinge (10) zu den Kunststoffbehältnissen (20) expandiert werden, wobei in einem Wechselbetrieb zumindest eine der Blasformeinrichtungen (14) der Vorrichtung entnommen wird und/oder eine der Blasformeinrichtungen an einem Blasformträger (16) der Vorrichtung angeordnet wird,
wobei
zum Wechseln der Blasformeinrichtungen (14) eine Wechseleinrichtung (40) verwendet wird, wobei eine erste Steuerungseinrichtung (22) eine Entfernungsbewegung der Blasformeinrichtungen und/oder eine Anordnungsbewegung zum Anordnen der Blasformeinrichtungen an den Blasformträgern (16) steuert und diese erste Steuerungseinrichtung (22) wenigstens zeitweise mit einer zweiten Steuerungseinrichtung (42) zum Steuern eines Blasformvorgangs zusammenwirkt,
**dadurch gekennzeichnet, dass**
die Wechseleinrichtung (40) wenigstens einen schwenkbaren Wechselarm (54, 56) aufweist und die Wechseleinrichtung (40) wenigstens mittelbar an einem Basisträger (6) angeordnet ist, sodass die Wechseleinrichtung (40) direkt im Bereich der Vorrichtung zum Umformen angeordnet ist.

9. Verfahren nach Anspruch 8,
**dadurch gekennzeichnet, dass**
die Umformungsstationen (8) in dem Arbeitsbetrieb entlang eines umlaufenden Transportpfades transportiert werden und in dem Wechselbetrieb die Blasformeinrichtungen in einer vorgegebenen und festgelegten Position der jeweiligen Umformungsstation, deren Blasformeinrichtung entnommen werden soll, bezüglich des umlaufenden Transportpfades, entnommen werden.

## Claims

1. An apparatus for the shaping of plastics material pre-forms (10) into plastics material containers (20) with a conveying device (2) which conveys the plastics material pre-forms (10) along a pre-set conveying path, wherein the conveying device (2) has a movable station carrier (12) which is arranged at least indirectly on a stationary base carrier (6) and on which are arranged a plurality of shaping stations (8), wherein these shaping stations (8) have in each case blow moulding devices (14) which form cavities in each case, inside which the plastics material pre-forms (10) are capable of being shaped to form the plastics material containers and these blow moulding devices are arranged in each case on blow mould carriers (16),
wherein the apparatus (1) has a changing device (40) which is suitable and intended for removing at least the blow moulding devices from the blow mould carriers (16) thereof and/or for arranging blow moulding devices on the blow mould carriers (16), wherein the changing device (40) has a first control device (22) for controlling a removing movement of the blow moulding devices and/or an arranging movement for arranging the blow moulding devices on the blow mould carriers (16) and the apparatus has a second control device (42) for controlling a blow moulding procedure, wherein the first control device (22) and the second control device (42) preferably co-operate at least for a time, **characterized in that**
the changing device (40) has at least one pivotable changing arm (54, 56) and the changing device (40) is at least arranged indirectly on the base carrier (6), so that the changing device (40) is located directly in the area of the apparatus for shaping.

2. An apparatus (1) according to claim 1,
**characterized in that**
the apparatus (1) has a housing (18) which surrounds at least the station carrier (12) in the peripheral direction thereof.

3. An apparatus (1) according to claim 2,
**characterized in that**
the changing device (40) is capable of being displaced as a whole into a space surrounded by the housing (18).

4. An apparatus (1) according to at least one of the preceding claims,
**characterized in that**
the changing device (40) has a first control device (22) for controlling a removal movement of the blow moulding devices and/or an arranging movement for the arrangement of the blow moulding devices on the blow mould carriers (16), and the apparatus also has a second control device (42) for controlling a blow moulding procedure, wherein one control device (22) is incorporated in the other control device (42).

5. An apparatus (1) according to at least one of the preceding claims,
**characterized in that**
the changing device (40) has at least one gripping device (52) for gripping the blow moulding devices (14).

6. An apparatus (1) according to at least one of the preceding claims,
**characterized in that**
the changing device (40) has at least one detection device (46) for detecting at least one force acting upon at least one element of the changing device (40).

7. An apparatus (1) according to at least one of the preceding claims,
**characterized in that**
the changing device (40) has a serial or parallel kinematic arrangement with at least three axes of movement (A1 ... A6).

8. A method of operating a shaping device for the shaping of plastics material pre-forms into plastics material containers, wherein during working operation of the apparatus the plastics material pre-forms are conveyed along a pre-set conveying path by means of a plurality of shaping stations (8) and are expanded by being acted upon with a flowable medium to form the plastics material containers, wherein in order to expand the plastics material pre-forms use is made of blow moulding devices (14), in the interior of which the plastics material pre-forms (10) are expanded to form the plastics material containers (20), wherein in a changing operation at least one of the blow moulding devices (14) is removed from the apparatus and/or one of the blow moulding devices is arranged on a blow mould carrier (16) of the apparatus,
wherein a changing device (40) is used to change the blow moulding devices (14), wherein a first control device (22) controls a removal movement of the blow moulding devices and/or an arranging movement for the arrangement of the blow moulding devices on the blow mould carriers (16), and this first control device (22) co-operates at least for a time with a second control device (42) for controlling a blow moulding procedure,
**characterized in that**
the changing device (40) has at least one pivotable changing arm (54, 56) and the changing device (40) is at least arranged indirectly on the base carrier (6), so that the changing device (40) is located directly in the area of the apparatus for shaping.

9. A method according to claim 8,
**characterized in that**
the shaping stations (8) are conveyed in working operation along a circulating conveying path and in the changing operation the blow moulding devices are removed in a pre-set and fixed position of the respective shaping station, the blow moulding device of which is to be removed, with respect to the circulating conveying path.

## Revendications

1. Dispositif destiné à façonner des ébauches en matière plastique (10) de manière à obtenir des récipients en matière plastique (20), comprenant un système de transport (2), lequel transporte les ébauches en matière plastique (10) le long d'un trajet de transport prédéfini, dans lequel le système de transport (2) comprend un support de station (12) mobile et agencé au moins indirectement sur un support de base (6) fixe, support de station sur lequel sont agencées une pluralité de stations de façonnage (8), dans lequel ces stations de façonnage (8) comprennent chacune des systèmes de moules de soufflage (14), lesquels constituent chacun des cavités à l'intérieur desquelles les ébauches en matière plastique (10) peuvent être façonnées de manière à obtenir des récipients en matière plastique et ces systèmes de moules de soufflage sont agencés chacun sur des supports de moules de soufflage (16), dans lequel le dispositif (1) comprend un système de changement (40), lequel est adapté et destiné à retirer les systèmes de moules de soufflage des supports de moules de soufflage (16) de ces derniers et/ou à agencer des systèmes de moules de soufflage sur les supports de moules de soufflage (16), dans lequel le système de changement (40) comprend un premier système de commande (22) destiné à commander un mouvement de retrait des systèmes de moules de soufflage et/ou un mouvement d'agencement pour l'agencement des systèmes de moules de soufflage sur les supports de moules de soufflage (16) et le dispositif comprend un deuxième système de commande (42) destiné à commander une procédure de moulage par soufflage, dans lequel le premier système de commande (22) et le deuxième système de commande (42) coopèrent au moins par intermittence,
**caractérisé en ce que**
le système de changement (40) comprend au moins un bras de changement pivotant (54, 56) et le système de changement (40) est agencé au moins indirectement sur un support de base (6), de telle sorte que le système de changement (40) est agencé directement dans la zone du dispositif de façonnage.

2. Dispositif (1) selon la revendication 1,
**caractérisé en ce que**
le dispositif (1) comprend un logement (18), lequel entoure au moins le support de station (12) dans la direction périphérique de celui-ci.

3. Dispositif (1) selon la revendication 2,
**caractérisé en ce que**
le système de changement (40) peut être déplacé dans son ensemble dans un espace entouré par le logement (18).

4. Dispositif (1) selon au moins l'une des revendications précédentes,
**caractérisé en ce que**
le système de changement (40) comprend un premier système de commande (22) destiné à commander un mouvement de retrait des systèmes de moules de soufflage et/ou un mouvement d'agencement pour l'agencement des systèmes de moules de soufflage sur les supports de moules de soufflage (16) et le dispositif comprend également un deuxième système de commande (42) destiné à commander une procédure de moulage par soufflage, dans lequel un système de commande (22) est intégré dans l'autre système de commande (42).

5. Dispositif (1) selon au moins l'une des revendications précédentes,
**caractérisé en ce que**
le système de changement (40) comprend au moins un système de préhension (52) destiné à saisir les systèmes de moules de soufflage (14).

6. Dispositif (1) selon au moins l'une des revendications précédentes,
**caractérisé en ce que**
le système de changement (40) comprend au moins un système de détection (46) destiné à détecter au moins une force agissant sur au moins un élément du système de changement (40).

7. Dispositif (1) selon au moins l'une des revendications précédentes,
**caractérisé en ce que**
le système de changement (40) présente une cinématique série ou parallèle comprenant au moins trois axes de mouvement (A1 ... A6).

8. Procédé de fonctionnement d'un dispositif de façonnage destiné à façonner des ébauches en matière plastique de manière à obtenir des récipients en matière plastique, dans lequel les ébauches en matière plastique, dans un mode de travail du dispositif, sont transportées le long d'un trajet de transport prédéfini au moyen d'une pluralité de stations de façonnage et, en étant soumises à l'effet d'un milieu coulant, sont amenées à se dilater de manière à obtenir les récipients en matière plastique, dans lequel des systèmes de moules de soufflage (14), à l'intérieur desquels les ébauches en matière plastique (10) sont amenées à se dilater de manière à obtenir les récipients en matière plastique (20), sont utilisés pour amener les ébauches en matière plastique à se dilater, dans lequel au moins l'un des systèmes de moules de soufflage (14) est prélevé du dispositif au cours d'un mode changement et/ou l'un des systèmes de moules de soufflage est agencé sur un support de moules de soufflage (16) du dispositif,
dans lequel un système de changement (40) est utilisé pour changer les systèmes de moules de soufflage (14), dans lequel un premier système de commande (22) commande un mouvement de retrait des systèmes de moules de soufflage et/ou un mouvement d'agencement pour l'agencement des systèmes de moules de soufflage sur les supports de moules de soufflage (16) et ce premier système de commande (22) coopère au moins temporairement avec un deuxième système de commande (42) destiné à commander une procédure de moulage par soufflage,
**caractérisé en ce que**
le système de changement (40) comprend au moins un bras de changement pivotant (54, 56) et le système de changement (40) est agencé au moins indirectement sur un support de base (6), de telle sorte que le système de changement (40) est agencé directement dans la zone du dispositif de façonnage.

9. Procédé selon la revendication 8,
**caractérisé en ce que**
les stations de façonnage (8), en mode travail, sont transportées le long d'un trajet de transport circulaire et, en mode changement, les systèmes de moules de soufflage sont prélevés dans une position prédéfinie et déterminée de la station de façonnage concernée, dont le système de moules de soufflage vise à être prélevé, par rapport au trajet de transport circulaire.
